# EUROPÄISCHE PATENTSCHRIFT

(11) **EP 2 616 713 B1**
(45) Veröffentlichungstag und Bekanntmachung des Hinweises auf die Patenterteilung: **14.05.2014**
(21) Anmeldenummer: 12756356.7
(22) Anmeldetag: 03.08.2012
(51) Int. Cl.: F16H 45/02, B60K 6/383, B60K 6/40, B60K 6/48

(54) **GETRIEBE FÜR EIN KRAFTFAHRZEUG**
TRANSMISSION FOR A MOTOR VEHICLE
BOÎTE DE VITESSES POUR VÉHICULE AUTOMOBILE

(30) Priorität: 08.08.2011 DE 102011109667
(43) Veröffentlichungstag der Anmeldung: 24.07.2013
(73) Patentinhaber: Voith Patent GmbH, 89522 Heidenheim (DE)
(72) Erfinder: MEIER-BURKAMP, Gerhard, 89522 Heidenheim (DE); SCHIPS, Rainer, 73479 Ellwangen (DE); SPRANGER, Andreas, 07937 Vogtl. Oberland (DE)
(74) Vertreter: Dr. Weitzel & Partner
(86) Internationale Anmeldenummer: PCT/EP2012/003317
(87) Internationale Veröffentlichungsnummer: WO 2013/020682

(56) Entgegenhaltungen:
- DE-A1- 19 950 988
- DE-A1-102008 015 226
- JP-A- 2004 122 879
- JP-A- 2009 236 233
- US-A- 4 756 210
- US-A1- 2007 251 789

## Beschreibung

Die Erfindung betrifft ein Getriebe für ein Kraftfahrzeug nach der im Oberbegriff von Anspruch 1 näher definierten Art.

Getriebe für Kraftfahrzeuge sind aus dem allgemeinen Stand der Technik bekannt. Bei solchen Getrieben, insbesondere bei Getrieben für Nutzfahrzeuge, ist es allgemein bekannt und üblich, hydrodynamische Wandler vorzusehen. Ebenso sind Drehschwingungsdämpfer bei derartigen Getrieben bekannt und üblich. Diese sind in den Getrieben häufig im Leistungsfluss vor dem eigentlichen Lastschaltgetriebe angeordnet. Nun ist es so, dass in der Praxis die Anwendung des hydrodynamischen Wandlers typischerweise nur beim Anfahren und in niedrigen Gangstufen zum Tragen kommt. Danach wird der hydrodynamische Wandler, welcher im Allgemeinen ein Turbinenrad, ein Pumpenrad und ein Leitrad beziehungsweise einen Leitapparat aufweist, über eine Überbrückungskupplung mit einem parallel zum hydrodynamischen Wandler verlaufenden Leistungszweig überbrückt.

Bei diesem Aufbau ist es ferner bekannt und üblich, das Turbinenrad des hydrodynamischen Wandlers an den zweiten Leistungszweig zur Zusammenführung der Leistungszweige anzubinden. Hierfür kennt der allgemeine Stand der Technik die Standardvariante, bei welcher die Anbindung des Turbinenrads auf der Sekundärseite des Drehschwingungsdämpfers erfolgt. Alternativ dazu kann die Turbine auch auf der Primärseite des Drehschwingungsdämpfers, also der der Antriebsmaschine zugewandten Seite des Drehschwingungsdämpfers, angebunden werden. Dies ist aufgrund der höheren Eingangsmasse typischerweise ein Vorteil und erlaubt ein besseres Dämpfen der Schwingungen der Verbrennungskraftmaschine gegenüber dem (Lastschalt)-Getriebe.

Bei ähnlich aufgebauten Getrieben mit einer elektrischen Maschine zur Hybridisierung ist es so, dass die Anbindung der Turbine in diesem Fall über einen Freilauf an die Sekundärseite des Drehschwingungsdämpfers erfolgt. Vergleiche beispielsweise hierzu die nicht vorveröffentlichte deutsche Patentanmeldung mit dem Aktenzeichen 10 2010 012 965.8-26 (Veröffentlichungsnummer : DE 102 010 012 965 A1). Da bei einem hybridisierten Getriebe die Masse der Turbine aufgrund des Freilaufs keine nennenswerte Rolle spielt, ist hier die Anbindung an die Sekundärseite des Drehschwingungsdämpfers, welche konstruktiv typischerweise sehr einfach zu realisieren ist, allgemein üblich.

Ein Getriebe nach dem Oberbegriff des Anspruchs 1 ist aus der DE 102 008 015 226 A1 bekannt.

Die Aufgabe der hier vorliegenden Erfindung liegt nun darin, ein Getriebe anzugeben, welches Vorteile hinsichtlich der Gesamtkosten und des Aufbaus gegenüber den Getrieben gemäß dem Stand der Technik ermöglicht.

Erfindungsgemäß wird diese Aufgabe durch ein Getriebe mit den Merkmalen im kennzeichnenden Teil des Anspruchs 1 gelöst. Weitere vorteilhafte Ausgestaltungen ergeben sich aus den hiervon abhängigen Unteransprüchen.

Das erfindungsgemäß aufgebaute Getriebe weist die Verbindung zwischen dem Turbinenrad und dem zweiten Leistungszweig auf der Primärseite des Drehschwingungsdämpfers auf, und weist zusätzlich eine Freilauf in eben dieser Verbindung auf. Dieser Aufbau mit einer Ankopplung des Turbinenrads an die Primärseite des Drehschwingungsdämpfers erlaubt eine Dämpfung der Torsionsschwingungen, welche die Belastung des Freilaufs reduziert, und ermöglicht außerdem eine hohe Rundlaufgenauigkeit im Freilauf.

In einer besonders günstigen und vorteilhaften Ausgestaltung des erfindungsgemäßen Getriebes ist es dabei vorgesehen, dass eine elektrische Antriebsmaschine zur Hybridisierung vorgesehen ist. Eine solche elektrische Antriebsmaschine zur Hybridisierung kann in dem Getriebe, insbesondere in Leistungsflussrichtung nach den wieder zusammengeführten Leistungszweigen, über Kupplungselemente einkoppelbar sein. Bei einem solchen Hybridgetriebe ist dann der Freilauf von entscheidender Bedeutung. Zusammen mit der Anbindung des Turbinenrads an die Primärseite des Drehschwingungsdämpfers ergibt sich die Möglichkeit, im hybridisierten Getriebe ebenso wie im nicht hybridisierten Getriebe dieselbe Art der Anbindung des Turbinenrads an die Primärseite des Drehschwingungsdämpfers zu realisieren. Im Falle der Hybridisierung erfolgt dies über den Freilauf, im Falle eines nicht hybridisierten Getriebes kann dieser Freilauf auch entfallen. Dennoch kann mit denselben Teilen und einem sehr ähnlichen konstruktiven Aufbau eine hohe Effizienz bei der Herstellung der Einzelteile für das Getriebe beziehungsweise den Drehschwingungsdämpfer, den hydrodynamischen Wandler und die Überbrückungskupplung erzielt werden. Dadurch werden über die Gesamtbaureihe aus hybridisiertem und nicht hybridisiertem Getriebe hinweg aufgrund der größeren Anzahl an Gleichteilen Synergien ermöglicht, welche zu erheblichen Kosteneinsparungen führen können.

In einer sehr vorteilhaften Ausgestaltung des erfindungsgemäßen Getriebes weist das Turbinenrad dabei eine Nabe auf, welche über den Freilauf und einen Mitnehmer zumindest mittelbar mit der Überbrückungskupplung und/oder dem Drehschwingungsdämpfer verbunden ist. In einer vorteilhaften Weiterbildung hiervon kann der Freilauf dabei in die Nabe integriert ausgebildet sein.

Insbesondere ein solcher in die Nabe des Turbinenrads integrierter Freilauf, welcher über den Mitnehmer zumindest mittelbar mit der Überbrückungskupplung und/oder dem Drehschwingungsdämpfer verbunden ist, ermöglicht einen sehr einfachen und effizienten Aufbau. Die Nabe kann beispielsweise in ein herkömmliches Turbinenrad eingeschweißt sein. Dann kann sehr einfach entweder eine Nabe mit Freilauf oder eine Nabe ohne Freilauf in das Turbinenrad einzugeschweißt werden. Die Nabe ohne Freilauf kann vorzugsweise in ihren Abmessungen so ausgebildet sein, wie die Kombination aus Freilauf und Nabe. Sie kann dann in den gleichen Bereichen und in der gleichen Technik mit dem Mitnehmer verbunden werden. Dadurch kann der gesamte Aufbau für eine Hybridisierung mit Freilauf oder ohne Hybridisierung, das heißt insbesondere ohne Freilauf, mit einem einzigen unterschiedlichen Bauteil, nämlich der Nabe, in welcher einmal der Freilauf integriert ausgebildet ist und einmal nicht, realisiert werden.

In einer sehr günstigen und vorteilhaften Weiterbildung hiervon ist der Freilauf dabei zwischen zwei drehfest miteinander verbundenen Ringelementen der Nabe angeordnet, wobei zwischen einem der Ringelemente und dem Freilauf ein Lager angeordnet ist. Vorteilhafterweise kann der Freilauf gemäß einer besonders günstigen Weiterbildung hiervon auf dem inneren Ringelement der Nabe angeordnet und an seinem Außenumfang mit Halteelementen versehen sein. Die Halteelemente können formschlüssig mit korrespondierenden Aufnahmeelementen des Mitnehmers zusammenwirken. Dieser Aufbau ist außerordentlich einfach und effizient, da durch ein reines Zusammenstecken des Mitnehmers und des mit der Nabe versehenem Turbinenrads die Verbindung realisiert werden kann.

In einer entsprechend günstigen und vorteilhaften Ausgestaltung dieses Aufbaus kann es ferner vorgesehen sein, dass der Mitnehmer als Teil eines Lamellenträgers der als Lamellenkupplung ausgebildeten Überbrückungskupplung oder auch als Teil einer Masse des Drehschwingungsdämpfers, insbesondere als Teil eines Gehäuses des Drehschwingungsdämpfers, ausgebildet ist. Dieser Aufbau ist besonders platzsparend und hinsichtlich der Anzahl der benötigten Teile sehr effizient. Der Mitnehmer kann eine Doppelfunktion übernehmen, sodass beispielsweise der Lamellenträger, der typischerweise ohnehin als Lamellenkupplung ausgebildeten Überbrückungskupplung, entsprechende Aufnahmeelemente für die Halteelemente des Freilaufs aufweist. So können die beiden Elemente direkt zusammenwirken und der Lamellenträger, welcher Teil des zweiten parallel zum hydrodynamischen Wandler verlaufenden Leistungszweigs ist, kann so über den Freilauf mit dem Turbinenrad des hydrodynamischen Wandlers einfach und effizient drehfest verbunden werden. Vergleichbares gilt, wenn der Mitnehmer als Teil einer Masse, insbesondere als Teil eines Gehäuses des Drehschwingungsdämpfers, ausgebildet ist. In diesem Fall reicht es beispielsweise, wenn im Bereich des Gehäuses die entsprechenden Aufnahmeelemente für die Halteelemente des Freilaufs angeordnet werden. Bei parallel zueinander angeordnetem hydrodynamischem Wandler und Drehschwingungsdämpfer kann dann durch ein einfaches Zusammenstecken ein Zusammenwirken der Aufnahmeelemente mit den korrespondierenden Halteelementen des Freilaufs erzielt werden, sodass diese Bauteile drehfest miteinander verbunden sind.

Weitere vorteilhafte Ausgestaltungen des erfindungsgemäßen Getriebes ergeben sich zusätzlich aus den restlichen abhängigen Patentansprüchen. Sie werden außerdem aus dem Ausführungsbeispiel deutlich, welches nachfolgend unter Bezugnahme auf die Figuren näher erläutert ist.

Dabei zeigen:
- Figur 1: ein Getriebe gemäß der Erfindung in einer beispielhaften Ausführungsform;
- Figur 2: eine Ausschnitt aus einem Teil des Turbinenrads gemäß der Erfindung;
- Figur 3: eine Darstellung gemäß Figur 2 in einer Explosionsdarstellung, in einer ersten Ansicht;
- Figur 4: eine Darstellung gemäß Figur 2 in einer Explosionsdarstellung, in einer zweiten Ansicht;
- Figur 5: eine alternative nicht beanspruchte Ausführungsvariante eines Turbinenrads in einer Darstellung analog Figur 2.

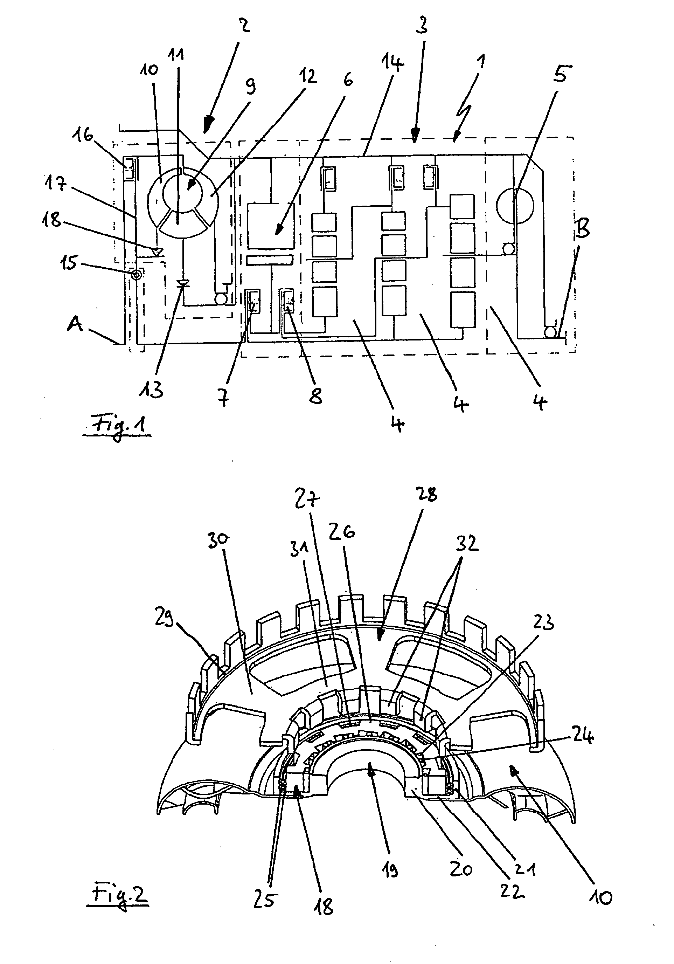

In der Darstellung der Figur 1 ist ein Getriebe 1 in einer möglichen bevorzugten Ausführungsform dargestellt. Das Getriebe 1 ist am Getriebeeingang A typischerweise mit einem Verbrennungsmotor, beispielsweise einem Dieselmotor eines Nutzfahrzeugs verbunden. Es weist einen sogenannten Anfahrbereich 2 und im Leistungsfluss danach ein Lastschaltgetriebe 3 auf. Das Lastschaltgetriebe 3 besteht im Wesentlichen aus drei Planetengetrieben 4, welche in der sogenannten Polak-Struktur miteinander verschaltet sind. Es weist außerdem einen Sekundärretarder 5 in Verbindung mit einem Getriebeausgang B auf. Eine optionale elektrische Antriebsmaschine 6 zur Hybridisierung des hier dargestellten Getriebes 1 ist zwischen zwei Kupplungen 7, 8 eingekoppelt. Der Anfahrbereich 2 des Getriebes 1 weist einen hydrodynamischen Wandler 9 auf, welcher ein Turbinenrad 10, ein Leitrad 11 sowie ein Pumpenrad 12 umfasst. Das Leitrad 11 ist über einen Freilauf 13 gegenüber einem Gehäuse 14 des Getriebes 1 abgestützt. Um Drehschwingungen des Verbrennungsmotors gegenüber dem Getriebe 1, insbesondere dem Lastschaltgetriebe 3, entsprechend abzudämpfen, ist außerdem ein Drehschwingungsdämpfer 15 vorgesehen. Vom Getriebeeingang A aus führt der Leistungsfluss zu einer Überbrückungskupplung 16, welche die Leistung zwischen dem hydrodynamischen Wandler 9 in einem ersten Leistungszweig und einem parallel dazu verlaufenden mit 17 bezeichneten Leistungszweig aufteilt. Der hydrodynamische Wandler 9 wird typischerweise beim Anfahren und bei Fahrt mit geringer Geschwindigkeit genutzt, danach schließt die Überbrückungskupplung 16 und die Leistung wird über den parallelen Leistungszweig 17 übertragen. In dem hier dargestellten Aufbau ist es nun so, dass das Turbinenrad 10 des hydrodynamischen Wandlers 9 mit diesem Leistungszweig 17 auf der Primärseite des Drehschwingungsdämpfers 15, also auf seiner dem Getriebeeingang A zugewandten Seite, verbunden ist. Die Verbindung zwischen dem Turbinenrad 10 und dem zweiten Leistungszweig 17 auf der Primärseite des Drehschwingungsdämpfers 15 weist dabei einen Freilauf 18 auf, um bei Verwendung der elektrischen Antriebsmaschine 6 zum Antrieb oder bei Verwendung der elektrischen Antriebsmaschine 6 zur Rekuperation von Bremsenergie keine unnötigen Verluste im Bereich des hydrodynamischen Wandlers 9 zu erzeugen.

Die Besonderheit besteht nun in der Anbindung des Turbinenrads 10 an den zweiten Leistungszweig 17 über den Freilauf 18 auf der Primärseite des Drehschwingungsdämpfers 15. Dies ist so im Stand der Technik nicht üblich. Es erscheint bei einem hybridisierten Getriebe 1 mit einer elektrischen Antriebsmaschine 6 auch nicht zwingend notwendig, da eine solche Anbindung des Turbinenrads 10 an die Primärseite des Drehschwingungsdämpfers 15 lediglich bei konventionellen Getrieben einen Vorteil darstellt. Der hier beschriebene Aufbau des Getriebes 1 ermöglicht durch die Anbindung des Turbinenrads 10 an die Primärseite des Drehschwingungsdämpfers 15 und die Integration des Freilaufs 18 jedoch die Möglichkeit einer Gleichteile-Strategie zwischen hybridisierten und nicht hybridisierten Getrieben, welche insgesamt zu erheblichen Kosteneinsparungen und zu einer deutlichen technischen Vereinfachung, insbesondere bei der Montage des Getriebes 1, führt.

Der Freilauf 18 kann dabei vorzugsweise als Rollenfreilauf konzipiert und in eine in Figur 2 erkennbare Nabe 19 des Turbinenrads 10 integriert ausgeführt sein. Die Nabe 19 des Turbinenrads 10 kann dafür vorzugsweise ein inneres Ringelement 20 und ein äußeres Ringelement 21 aufweisen, welche über eine umlaufende radiale Scheibe 22 miteinander verbunden sind. Diese drei Teile können vorzugsweise einstückig, beispielsweise als Gussteil oder Schmiedeteil, ausgeführt sein. Sie können mit dem Turbinenrad 10, insbesondere im Bereich der Scheibe 22, verschweißt sein. Zwischen den beiden Ringelementen 20, 21 kann nun der Freilauf 18 angeordnet sein. Dieser ist vorzugsweise als Rollenfreilauf ausgebildet, was in dem dargestellten Ausschnitt der Figur 2 durch entsprechende Kammern 23 mit darin angeordneten Rollen 24 zu erkennen ist. In der einen Drehrichtung laufen die Rollen 24 am einen Ende der sich in eine Umfangsrichtung verjüngenden Kammern 23 frei mit. In der anderen Drehrichtung verklemmen die Rollen 24 zwischen dem Freilauf 18 und dem inneren Ring 20 aufgrund der sich in dieser Drehrichtung verjüngenden Kammern 23. Der Außendurchmesser des Freilaufs 18 ist über ein Lager 25, beispielsweise ein Gleitlager, oder zwei parallel angeordnete Dünnringlager gelagert. Der Außenumfang des Freilaufs 18 weist außerdem Vorsprünge 26 und Ausnehmungen 27 auf, welche sich abwechseln, und auf deren Funktion später noch näher eingegangen wird. Die Funktionalität des Freilaufs 18 ist nun so, dass in der einen Richtung der mit 18 bezeichnete Freilauf sich frei in der Nabe 19 drehen kann, während in der anderen Drehrichtung Nabe 19 und Freilauf 18 zu einer fest miteinander verbundenen Einheit werden. Wie zu erkennen ist, ist die Nabe 19 dabei an ihrem Innendurchmesser ohne Verzahnung ausgebildet. Sie wirkt hier also nicht drehfest mit einer Welle zusammen, sondern ist drehbar auf einer solchen gelagert.

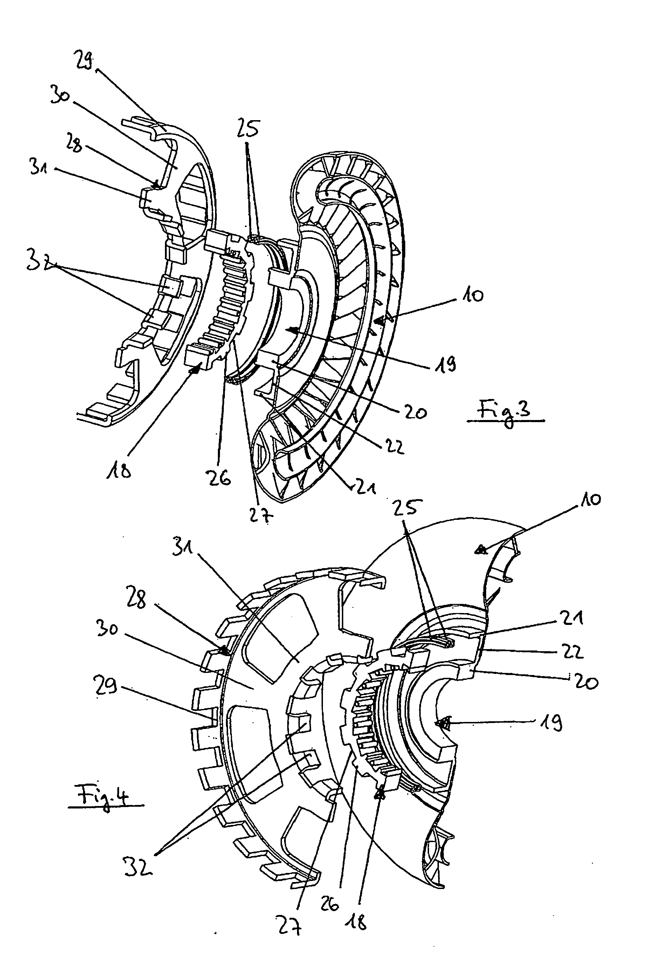

Außerdem ist ein Mitnehmer 28 mit Abstand von der Nabe 19 dargestellt. Dieser Mitnehmer 28 weist in dem hier dargestellten Ausführungsbeispiel ein äußeres Ringelement 29 auf, welches in axialer Richtung abwechselnd Vorsprünge und Ausnehmungen aufweist. In dem hier dargestellten Ausführungsbeispiel soll dieses äußere Ringelement ein Lamellenträger 29 für Kupplungslamellen der als Lamellenkupplung ausgebildeten Überbrückungskupplung 16 sein. Das äußere Ringelement 29 des Mitnehmers 28 ist über Speichen 30 mit einem inneren Ringelement 31 verbunden. Dieses innere Ringelement weist in axialer Richtung verlaufende Aufnahmeelemente 32 in Form von in axialer Richtung über das innere Ringelement 31 überstehenden Vorsprüngen auf. Diese Aufnahmeelemente 32 wirken nun mit den Ausnehmungen 27 am Außenumfang des Freilaufs 18 zusammen. Werden diese Teile ineinander gesteckt, so kommt es zu einem Formschluss oder zumindest nach einer Verdrehung des Freilaufs 18 gegenüber dem Mitnehmer 28 nach einem gewissen Wegstück zu einem Anschlag der Aufnahmeelemente 32 an den Vorsprüngen 26 zwischen den Ausnehmungen 27 des Freilaufs 18. Der Mitnehmer 28 kann so eine drehfeste Verbindung zwischen dem Freilauf 18 und, in dem hier dargestellten Ausführungsbeispiel den Lamellenträger 29 beziehungsweise den Lamellen der Überbrückungskupplung 16 realisieren. Dieser Aufbau ist entsprechend einfach und effizient und erlaubt es, das Turbinenrad 10 über den Mitnehmer 28 an die Primärseite des Drehschwingungsdämpfers 15, in diesem Fall an die Sekundärseite der mit dem Drehschwingungsdämpfer 15 verbundenen Überbrückungskupplung 16, anzubinden. Die Figuren 3 und 4 zeigen den Aufbau als Explosionsdarstellung aus zwei verschiedenen Blickrichtungen.

Ergänzend oder alternativ dazu wäre es auch möglich, den Mitnehmer 28 so auszubilden, dass dieser ein Teil der Masse, insbesondere in Teil des Gehäuses des Drehschwingungsdämpfers 15, wäre. In diesem Fall müsste das Gehäuse des Drehschwingungsdämpfers 15 dessen Primärseite ausbilden. An das Gehäuse des Drehschwingungsdämpfers 15 könnte dann der Mitnehmer 28 beziehungsweise ein Mitnehmer 28, welcher auf den inneren Ring 31 mit den Aufnahmeelementen 32 reduziert ausgebildet ist, entsprechend angebracht werden. Beispielsweise wäre ein Verkleben oder Verschweißen denkbar. Insbesondere kann der Mitnehmer 28 auch einstückig mit dem Gehäuse des Drehschwingungsdämpfers 15 ausgebildet sein, indem beispielsweise ein äußeres Blechgehäuse des Drehschwingungsdämpfers 15 die entsprechenden Vorsprünge als Aufnahmeelemente 32 an der geeigneten Stelle aufweist.

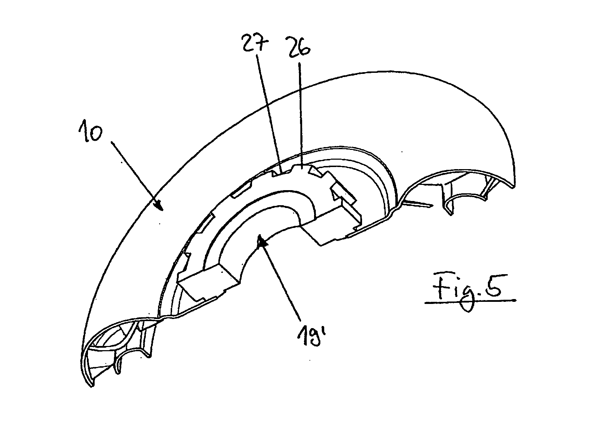

In der Darstellung der Figur 5 ist analog zur Darstellung in Figur 2 wiederum ein Teil des Turbinenrads 10 mit einer Nabe 19' zu erkennen. Anders als in dem oben beschriebenen Ausführungsbeispiel weist die Nabe 19' hier jedoch keinen erfindungsgemäßen Freilauf auf. Die Nabe 19' ist vielmehr einstückig so ausgebildet, dass diese an ihrem äußeren Umfang die Vorsprünge 26 und die Ausnehmungen 27 analog zu den im Freilauf 18 ausgebildeten Vorsprüngen 26 und Ausnehmungen 27 aufweist. Diese sind jedoch einstückig mit der Nabe 19' ausgeführt. Die Nabe 19' kann dann analog zur Darstellung in Figur 3 zusammen mit dem Mitnehmer 28 eingesetzt werden, um den in Figur 2 und 3 dargestellten Aufbau ohne den Freilauf 18 zu realisieren. Dies ist bei Getrieben ohne die elektrische Antriebsmaschine 6, also bei nicht hybridisierten Getrieben, ohne Nachteil möglich. Wie zu erkennen ist, kann der Aufbau dabei bis auf die Ausbildung der Nabe 19' selbst identisch erfolgen. Der komplette hydrodynamische Wandler 9 samt Turbinenrad 10 sowie der Drehschwingungsdämpfer 15 und die Überbrückungskupplung 16 können identisch ausgebildet werden. Der Mitnehmer 28 ist ebenfalls vorhanden, greift jedoch nicht in den Freilauf 18, sondern in die Ausnehmungen 27 der in Figur 5 dargestellten Nabe 19' ohne Freilauf ein. Damit lässt sich mit einem einzigen geänderten Bauteil, nämlich der Nabe 19', und ansonsten identischen Bauteilen und identischem Montageablauf, eine Variante für nicht hybridisierte Getriebe und eine Variante für hybridisierte Getriebe 1 realisieren. Der Aufbau ist sehr einfach und effizient und kann insbesondere durch den Austausch der Nabe 19' sowie, zwecks Montageerleichterung, gegebenenfalls des gesamten Turbinenrads 10 samt Nabe 19' auch zur Nachrüstung bestehender Getriebe 1 bei einer nachträglichen Hybridisierung eingesetzt werden, da durch eine in die Nabe 19 integrierten Freilauf 18 dieser auch in bestehende Getriebekonstruktionen einfach und effizient eingebaut werden kann.

## Patentansprüche

1. Getriebe (1) für ein Kraftfahrzeug, mit
1.1 einem hydrodynamischen Wandler (9), welcher ein Turbinenrad (10), ein Pumpenrad (12) und ein Leitrad (11) umfasst, in einem ersten Leistungszweig;
1.2 einer Überbrückungskupplung (16) für den hydrodynamischen Wandler (9);
1.3 einem zweiten Leistungszweig (17) in Verbindung zur Überbrückungskupplung (16) und parallel zum hydrodynamischen Wandler (9);
1.4 einem Drehschwingungsdämpfer (15);
1.5 einer Verbindung zwischen dem Turbinenrad (10) und dem zweiten Leistungszweig (17), wobei die Verbindung einen Freilauf (18) aufweist;
**dadurch gekennzeichnet, dass**
1.6 die Verbindung zwischen dem Turbinenrad (10) und dem zweiten Leistungszweig (17) auf der Primärseite des Drehschwingungsdämpfers (15) ausgebildet ist.

2. Getriebe (1) nach Anspruch 1, **dadurch gekennzeichnet, dass** eine elektrische Antriebsmaschine (6) zur Hybridisierung vorhanden ist.

3. Getriebe (1) nach Anspruch 2, **dadurch gekennzeichnet, dass** die elektrische Antriebsmaschine (6) in Leistungsflussrichtung nach den wiederzusammengeführten Leistungszweigen eingekoppelt, insbesondere über Kupplungselemente (7, 8) einkoppelbar, ist

4. Getriebe (1) nach Anspruch 1, 2 oder 3, **dadurch gekennzeichnet, dass** das Turbinenrad (10) eine Nabe (19) aufweist, welche über den Freilauf (18) und einen Mitnehmer (28) zumindest mittelbar mit der Überbrückungskupplung (16) und/oder dem Drehschwingungsdämpfer (15) verbunden ist.

5. Getriebe (1) nach Anspruch 4, **dadurch gekennzeichnet, dass** der Freilauf (18) in die Nabe (19) integriert ausgebildet ist.

6. Getriebe (1) nach Anspruch 5, **dadurch gekennzeichnet, dass** der Freilauf (18) zwischen zwei drehfest miteinander verbundenen Ringelementen (20, 21) der Nabe (19) angeordnet ist, wobei zwischen einem der Ringelemente (21) und dem Freilauf (18) ein Lager (25) angeordnet ist.

7. Getriebe (1) nach Anspruch 6, **dadurch gekennzeichnet, dass** der Freilauf (18) auf dem inneren Ringelement (20) der Nabe (19) angeordnet und an seinem Außenumfang mit Halteelementen (26, 27) versehen ist, welche mit korrespondierenden Aufnahmeelementen (32) des Mitnehmers (28) zusammenwirken.

8. Getriebe (1) nach Anspruch 7, **dadurch gekennzeichnet, dass** die Halteelemente als Ausnehmungen (27) und Vorsprünge (26) am Außenumfang des Freilaufs (18) ausgebildet sind, wobei die Aufnahmeelemente (32) als Vorsprünge ausgebildet sind und in die Ausnehmungen (27) eingreifen.

9. Getriebe (1) nach einem der Ansprüche 4 bis 8, **dadurch gekennzeichnet, dass** der Mitnehmer (28) als Teil eines Lamellenträgers (29) der als Lamellenkupplung ausgebildeten Überbrückungskupplung (16) ausgebildet ist.

10. Getriebe (1) nach einem der Ansprüche 4 bis 9, **dadurch gekennzeichnet, dass** der Mitnehmer (28) als Teil einer Masse des Drehschwingungsdämpfers (15) ausgebildet ist.

11. Getriebe (1) nach Anspruch 10, **dadurch gekennzeichnet, dass** der Mitnehmer (28) als Teil eines Gehäuses des Drehschwingungsdämpfers (15) ausgebildet ist.

12. Getriebe (1) nach einem der Ansprüche 1 bis 11, **dadurch gekennzeichnet, dass** der Freilauf (18) als Rollenfreilauf ausgebildet ist.

## Claims

1. A transmission (1) for a motor vehicle, having
1.1 a hydrodynamic converter (9), which comprises a turbine wheel (10), a pump wheel (12) and a guide wheel (11), in a power branch;
1.2 a lockup clutch (16) for the hydrodynamic converter (9);
1.3 a second power branch (17) in connection with the lockup clutch (16) and parallel to the hydrodynamic converter (9);
1.4 a torsional vibration damper (15);
1.5 a connection between the turbine wheel (10) and the second power branch (17), whereas the connection includes a free-wheel mechanism (18);
**characterised in that**
1.6 the connection between the turbine wheel (10) and the second power branch (17) is arranged on the primary side of the torsional vibration damper (15).

2. A transmission (1) according to claim 1, **characterised in that** an electric drive machine (6) is arranged for hybridisation purposes.

3. A transmission (1) according to claim 2, **characterised in that** the electric drive machine (6) is coupled or can be coupled, in particular via coupling elements (7, 8), in power flow direction downstream of the united power drives.

4. A transmission (1) according to claim 1, 2 or 3, **characterised in that** the turbine wheel (10) includes a hub (19), which is connected at least indirectly with the lockup clutch (16) and/or the torsional vibration damper (15) via the free-wheel mechanism (18) and a tappet (28).

5. A transmission (1) according to claim 4, **characterised in that** the free-wheel mechanism (18) is integrated into the hub (19).

6. A transmission (1) according to claim 5, **characterised in that** the free-wheel mechanism (18) is arranged between two ring elements (20, 21) of the hub (19), elements which are connected to each other in a torque-proof manner, whereas a bearing (25) is arranged between one of the ring elements (21) and the freewheel mechanism (18).

7. A transmission (1) according to claim 6, **characterised in that** the free-wheel mechanism (18) is arranged on the internal ring element (20) of the hub (1.9) and is fitted with holding elements (26, 27) on its external circumference, elements which co-operate with corresponding receiving elements (32) of the tappet (28).

8. A transmission (1) according to claim 7, **characterised in that** the holding elements are designed as recesses (27) and protrusions (26) on the external circumference of the free-wheel mechanism (18), whereas the receiving elements (32) are designed as protrusions and mesh into the recesses (27).

9. A transmission (1) according to one of the claims 4 to 8, **characterised in that** the tappet (28) is designed as part of a lamella carrier (29) of the lockup clutch (16) in the form of a lamella coupling.

10. A transmission (1) according to one of the claims 4 to 9, **characterised in that** the tappet (28) is designed as part of a mass of the torsional vibration damper (15).

11. A transmission (1) according to claim 10, **characterised in that** the tappet (28) is designed as part of a housing of the torsional vibration damper (15).

12. A transmission (1) according to one of the claims 1 to 11, **characterised in that** the free-wheel mechanism (18) is designed as a roller free-wheel mechanism.

## Revendications

1. Transmission (1) pour véhicule automobile, comportant
1.1 un convertisseur hydrodynamique (9), qui comprend une roue de turbine (10), une roue de pompe (12) et une roue directrice (11), dans une branche de puissance ;
1.2 un embrayage de pontage (16) pour le convertisseur hydrodynamique (9);
1.3 une seconde branche de puissance (17) en liaison avec l'embrayage de pontage (16) et parallèle au convertisseur hydrodynamique (9);
1.4 un amortisseur de vibrations torsionelles (15) ;
1.5 une liaison entre la roue de turbine (10) et la seconde branche de puissance (17), où ladite liaison présente un mécanisme à roue libre (18);
**caractérisée en ce que**
1.6 la liaison entre la roue de turbine (10) et la seconde branche de puissance (17) est conçue sur le côté primaire de l'amortisseur de vibrations torsionelles (15).

2. Transmission (1) selon la revendication 1, **caractérisée en ce qu'**un moteur d'entraînement électrique (6) est prévu pour l'hybridation.

3. Transmission (1) selon la revendication 2, **caractérisée en ce que** le moteur d'entraînement électrique (6) est accouplé ou bien peut être accouplé dans le sens du flux de puissance en aval des branches de puissance réunies, en particulier par le biais des éléments d'accouplement (7, 8).

4. Transmission (1) selon la revendication 1, 2 ou 3, **caractérisée en ce que** la roue de turbine (10) présente un moyeu (19), qui est relié au moins indirectement avec l'embrayage de pontage (16) et/ou l'amortisseur de vibrations torsionelles (15) par le biais du mécanisme à roue libre (18) et d'un entraîneur (28).

5. Transmission (1) selon la revendication 4, **caractérisée en ce que** le mécanisme à roue libre (18) est intégré au moyeu (19).

6. Transmission (1) selon la revendication 5, **caractérisée en ce que** le mécanisme à roue libre (18) est agencé entre deux éléments annulaires (20, 21) du moyeu, reliés l'un à l'autre avec blocage en rotation, où un palier (25) est disposé entre l'un des éléments annulaires (21) et le mécanisme à roue libre (18).

7. Transmission (1) selon la revendication 6, **caractérisée en ce que** le mécanisme à roue libre (18) est disposé sur l'élément annulaire interne (20) du moyeu (1.9) et est pourvu d'éléments supports (26, 27) en son périmètre externe, éléments coopérant avec des éléments de réception (32) de l'entraîneur (28).

8. Transmission (1) selon la revendication 7, **caractérisée en ce que** les éléments de retenue sont sous forme d'évidements (27) et de saillies (26) sur le périmètre externe du mécanisme à roue libre (18), où les éléments de réception sont sous forme de saillies et s'engrènent dans les évidements (27).

9. Transmission (1) selon l'une des revendications 4 à 8, **caractérisée en ce que** l'entraîneur (28) fait partie d'un support à lamelles (29) de l'embrayage de pontage (16) conçu comme embrayage à lamelles.

10. Transmission (1) selon l'une des revendications 4 à 9, **caractérisée en ce que** l'entraîneur (28) fait partie d'une masse de l'amortisseur de vibrations torsionelles (15).

11. Transmission (1) selon la revendication 10, **caractérisée en ce que** l'entraîneur (28) fait partie d'un logement de l'amortisseur de vibrations torsionelles (15).

12. Transmission (1) selon l'une des revendications 1 à 11, **caractérisée en ce que** le mécanisme à roue libre (18) est sous forme de mécanisme d'embrayage de dépassement de course.
